(19) Europäisches Patentamt
European Patent Office
Office européen des brevets

(11) Veröffentlichungsnummer: **0 019 128**
**B1**

(12) # EUROPÄISCHE PATENTSCHRIFT

(45) Veröffentlichungstag der Patentschrift: **20.10.82**

(51) Int. Cl.³: **C 09 B 45/20,** D 06 P 3/04, D 06 P 3/14, D 06 P 3/24, D 06 P 3/32

(21) Anmeldenummer: **80102272.4**

(22) Anmeldetag: **26.04.80**

(54) **Kobalt-Komplexfarbstoffe, Verfahren zu ihrer Herstellung sowie ihre Verwendung zum Färben und Bedrucken.**

(30) Priorität: **09.05.79 DE 2918633**

(43) Veröffentlichungstag der Anmeldung: **26.11.80 Patentblatt 80/24**

(45) Bekanntmachung des Hinweises auf die Patenterteilung: **20.10.82 Patentblatt 82/42**

(84) Benannte Vertragsstaaten: **BE CH DE FR GB IT LI**

(56) Entgegenhaltungen:
**CH-A-587 314**
**DD-A-36 434**
**DE-A-2 616 405**
**DE-A-2 729 915**
**DE-A-2 811 752**
**GB-A-1 324 806**
**US-A-4 051 116**
**US-A-4 118 381**

(73) Patentinhaber: **BAYER AG, Zentralbereich Patente, Marken und Lizenzen, D-5090 Leverkusen 1, Bayerwerk (DE)**

(72) Erfinder: **Mennicke, Winfried, Dr., Steglitzer Strasse 8, D-5090 Leverkusen (DE)**

**EP 0 019 128 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Kobalt-Komplexfarbstoffe, Verfahren zu ihrer Herstellung sowie ihre Verwendung zum Färben und Bedrucken

Gegenstand der vorliegenden Erfindung sind Kobaltkomplexe der allgemeinen Formel

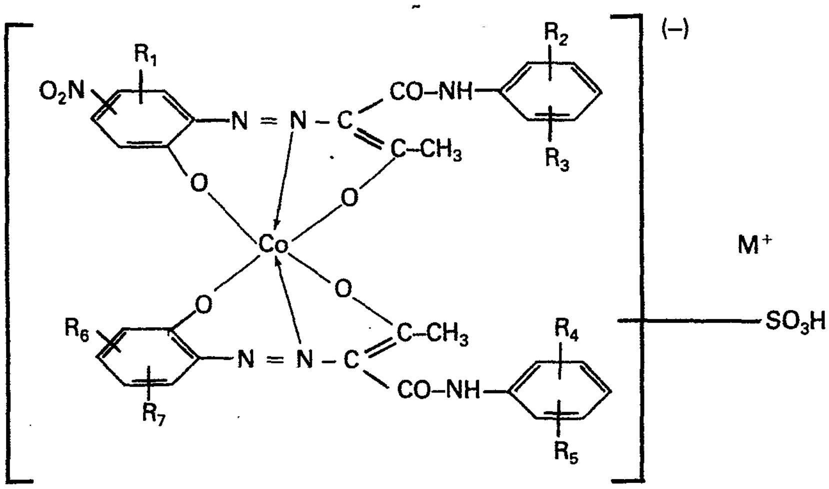

(I)

wobei die Sulfonsäuregruppen an einem der Benzolringe oder an einem Arylkern der Arylazo- bzw. Arylsulfonylgruppe in $R^6$ bzw. $R^7$ steht, M ein farbloses Kation bedeutet, beispielsweise ein Alkalimetallion wie Lithium-, Natrium- oder Kaliumion, oder Ammonium oder ein mit $C_1$–$C_4$-Alkyl- oder Hydroxy-$C_1$–$C_4$-alkylgruppen substituiertes Ammonium,

$R_1$ Wasserstoff, Chlor, $C_1$–$C_4$-Alkyl, Acylamino oder Nitro,

$R_2$, $R_3$, $R_4$ und $R_5$ unabhängig voneinander Wasserstoff, Halogen, $C_1$–$C_4$-Alkyl, $C_1$–$C_4$-Alkoxy,

$R_6$ und $R_7$ unabhängig voneinander Wasserstoff, Nitro, Halogen, $C_1$–$C_4$-Alkyl, Acylamino, Arylazo, $C_1$–$C_4$-Alkylsulfonyl oder Arylsulfonyl, $C_1$–$C_4$-Alkoxy

bedeuten.

Die $C_1$–$C_4$-Alkylgruppen können generell gegebenenfalls weiter substituiert sein beispielsweise durch OH, $C_1$–$C_4$-Alkoxy, Acyloxy, CN oder Halogen.

Die Arylgruppen können einen oder mehrere Substituenten tragen, beispielsweise Nitro, Chlor, Methyl oder Methoxy.

Bevorzugte Acylaminogruppen sind $C_1$–$C_4$-Alkylcarbonylamino, Arylcarbonylamino, $C_1$–$C_4$-Alkylsulfonylamino, Arylsulfonylamino und $C_1$–$C_4$-Alkoxycarbonylamino.

Bevorzugte Arylgruppen sind gegebenenfalls substituiertes Phenyl. Bevorzugte Farbstoffe sind solche der Formel

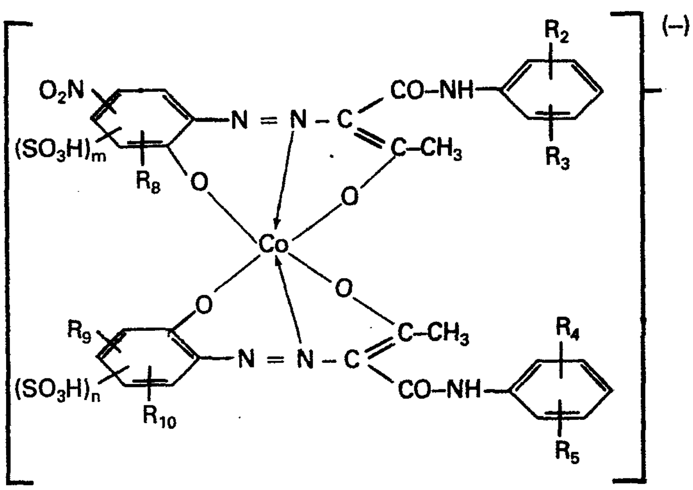

$M^+$ (II)

wobei die Symbole $R_2$, $R_3$, $R_4$, $R_5$ die obengenannte Bedeutung besitzen, n und m = 0 oder 1 und n + m = 1; und $R_8$ für Wasserstoff steht, wenn m = 1, und für Wasserstoff, Acetamino, Nitro, Methyl oder Chlor steht, wenn m = 0, und $R_9$ und $R_{10}$ unabhängig voneinander für Wasserstoff, Nitro, Methyl, Chlor, Acetamino, $C_1$–$C_4$-Alkylsulfonyl, Phenylsulfonyl oder Methoxy stehen, wenn n = 0, und $R_9$ für Wasserstoff und $R_{10}$ für Wasserstoff, Nitro, Chlor, Brom, Methyl oder Ethyl steht, wenn n = 1.

Die erfindungsgemässen Kobaltmischkomplexe

der Formel (I) und (II) können u.a. hergestellt werden, indem man nach dem Verfahren der Deutschen Offenlegungsschrift 2 153 549 beispielsweise einen 1:1-Kobaltkomplex der Formel (III)

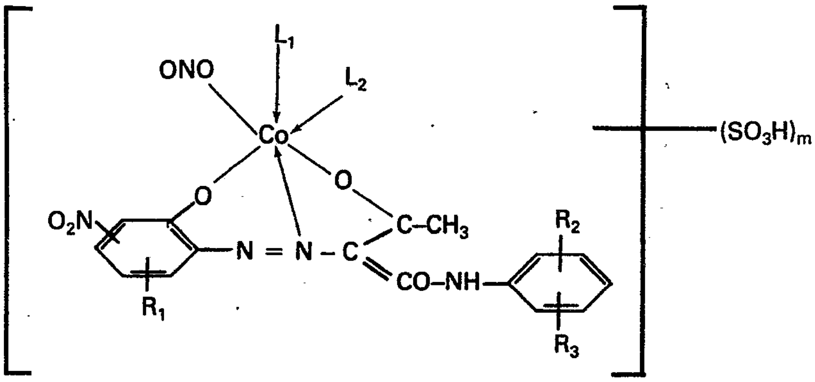
(III)

wobei $R_1$, $R_2$, $R_3$ und m ihre oben erwähnte Bedeutung beibehalten, und die $SO_3H$ an den bereits genannten Positionen stehen kann, und $L_1$ und $L_2$ farblose, einzähnige Liganden darstellen, beispielsweise Sauerstoff- und Stickstoffgruppierungen mit Elektronendonatoreigenschaften, insbesondere Wassermoleküle, mit der stöchiometrischen Menge einer Azoverbindung der Formel

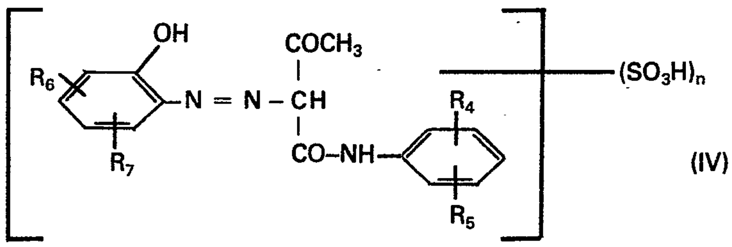
(IV)

umsetzt.

Ein bevorzugtes Herstellungsverfahren besteht darin, Gemische aus je einem oder mehreren Farbstoffen (IV) und solchen der Formel

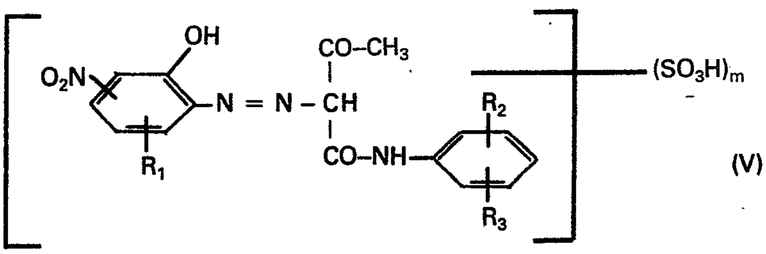
(V)

mit kobaltabgebenden Mitteln zu behandeln, ein Verfahren, bei dem neben den asymmetrischen Komplexen der Formel (I) bzw. (II) auch die entsprechenden symmetrischen 1:2-Kobaltkomplexe entstehen. Das Verhältnis einer Azoverbindung oder mehrerer Azoverbindungen der Formel (IV) gegenüber einer Azoverbindung oder mehrerer Azoverbindungen der Formel (V) braucht hier nicht stöchiometrisch zu sein, sondern kann in weiten Grenzen schwanken, beispielsweise von 70:30 bis 30:70, vorzugsweise in den Grenzen von 60:40 bis 40:60. Das Molverhältnis der zu metallisierenden Azoverbindungen und des kobaltabgebenden Mittels beträgt vorzugsweise 2:1. Die Kobaltierung erfolgt im wässrigen oder in organisch wässrigem Medium bei Temperaturen von 20–100 °C, vorzugsweise bei 40–80° unter Normaldruck bei einem pH von 7–12, vorzugsweise bei pH 10–12. Als organische Lösungsmittel kommen niedere Alkohole wie Ethanol, Carbonamide wie Formamid oder Dimethylformamid, Ethylenglykol oder dessen Mono-$C_1$–$C_4$-Alkylether in Frage. Geeignete Kobaltierungsmittel sind Kobaltsalze von anorganischen oder organischen Säuren, beispielsweise Kobaltcarbonat, Kobaltchlorid, Kobaltsulfat, Kobaltacetat oder Kobaltformiat. Die Metallisierung findet vorzugsweise in Anwesenheit von Säureakzeptoren statt, beispielsweise von Carbonaten, Hydrogencarbonaten, Oxiden und Hydroxiden von Alkali- und Erdalkalimetallen wie $Li_2CO_3$, $Na_2CO_3$, $K_2CO_3$, $LiHCO_3$, $NaHCO_3$, $KHCO_3$, LiOH, NaOH, KOH, MgO oder CaO, oder von alkalisch wirkenden Salzen von Alkalimetallen, wie Natrium- oder Kaliumacetat.

Die Kobaltkomplexe können nach beendeter Metallisierung durch Sprühtrocknung isoliert oder durch Ansäuern oder durch Aussalzen mit Natriumchlorid oder Kaliumchlorid gefällt, abgesaugt und getrocknet werden. Sie liegen je nach Wahl des Säureakzeptors und nach Art der Isolierung bevorzugt als Lithium-, Natrium-, Kaliumsalze oder in saurer Form vor. Letzteres kann durch Umsetzung mit Ammoniak oder mit $C_1$–$C_4$-alkylsubstituierten oder hydroxy-$C_1$–$C_4$-alkylsubstitu-

ierten Aminen in die entsprechenden Ammoniumsalze überführt werden.

Die Monoazofarbstoffe der Formeln (IV) bzw. (V) sind bekannt.

Die nach obigen Angaben erhältlichen neuen 1:2-Kobaltkomplexfarbstoffe sind ausreichend wasserlöslich. Ihre Wasserlöslichkeit lässt sich im Falle der Mischungen von symmetrischen und unsymmetrischen Farbstoffen zudem noch verbessern, wenn man bei dem zu metallisierenden Gemisch den Anteil des sulfonsäuregruppenhaltigen Azofarbstoffes leicht erhöht, etwa von 50 auf 60%. Die erfindungsgemässen Kobaltkomplexe eignen sich zum Färben und Bedrucken verschiedenster Stoffe, vor allem zum Färben stickstoffhaltiger Materialien, wie Seide, Wolle, synthetische Faser aus Polyamiden oder Polyurethanen, und bevorzugt zum Färben von Leder. Sie sind besonders zum Spritzfärben und zum Färben aus schwach alkalischem, z.B. ammoniakalischem, neutralem oder schwach saurem, z.B. essigsaurem Bad geeignet und können als solche oder in Form von stabilen Lösungen oder festen Präparationen eingesetzt werden, wobei im Falle der Lösungen vorteilhaft mit Wasser nicht mischbare organische Lösungsmittel und gegebenenfalls weitere Lösungsvermittler verwendet, und im Falle von festen Präparationen die üblichen Hilfsmittel und Stellmaterialien, wie Natriumsulfat, Dextrin und/oder Dispergiermittel zugesetzt oder eingearbeitet werden können. Die erhaltenen Färbungen weisen rotstichig gelbe, braunstichig gelbe und gelbe Nuancen auf, sind egal und zeichnen sich durch hohe Lichtechtheit und gute Gebrauchsechtheiten aus. Auf den verschieden gegerbten Ledern lassen sich egale, ergiebige, schweisswasser- und reibechte Färbungen erzielen, die auch bei abnehmender Farbtiefe eine hohe Lichtechtheit beibehalten.

Gegenüber den nächstvergleichbaren Farbstoffen der Schweizer Patentschrift 587 314 (entsprechende Kobaltkomplexe mit zwei Sulfogruppen im Molekül) weisen die beanspruchten Farbstoffe überraschenderweise ein besseres Aufbauvermögen beim Färben von Chromleder und nachgegerbtem Leder auf.

Beispiel 1

0,1 Mol des durch Reaktion von diazotiertem 4-Nitro-2-aminophenol mit Acetessigsäureanilid gewonnenen Monoazofarbstoffes wird zusammen mit 0,1 Mol des durch Reaktion von diazotierter 2-Aminophenol-4-sulfonsäure mit Acetessigsäure gewonnenen Monoazofarbstoffes in einem Liter Wasser verrührt. Man setzt 0,1 Mol Kobaltsulfat zu, stellt mit konzentrierter Natronlauge auf pH 10 und rührt das Gemisch 30 Minuten bei Raumtemperatur und dann 2 Stunden bei 70 °C, wobei der pH mit Natronlauge stets bei 10 gehalten wird. In der dabei erhaltenen Lösung lassen sich durch Chromatographieren die beiden Ausgangsfarbstoffe nicht mehr nachweisen. Die gebildeten Kobaltkomplexe, die hauptsächlich den Kobaltmischkomplex der Formel

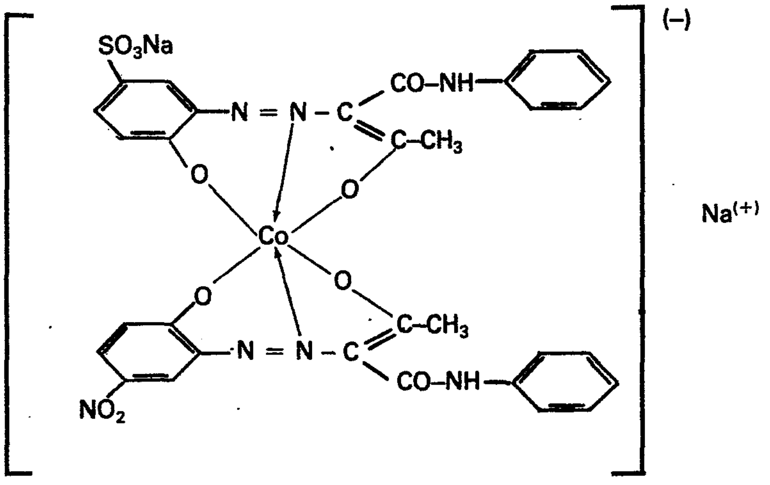

darstellen, werden nach Abkühlen der Lösung auf 40 °C mit 200 g Kochsalz gefällt und dann abgesaugt. Sie stellen in getrocknetem und gemahlenem Zustand ein gut wasserlösliches dunkelbraunes Pulver dar, welches Wolle, Polyamid und Leder in gelben Tönen mit guter Lichtechtheit und guten Nassechtheiten färbt.

Beispiel 2

0,1 Mol Monoazofarbstoff, hergestellt aus diazotierter 6-Nitro-2-aminophenol-4-sulfonsäure und Acetessiganilid, und 0,1 Mol Monoazofarbstoff, hergestellt aus diazotiertem 4-Nitro-2-aminophenol und Acetessiganilid, werden gemeinsam in einem Liter Wasser wie unter Beispiel 1 beschrieben mit 0,1 Mol Kobaltsulfat kobaltiert. Es entsteht ein Gemisch, das hauptsächlich aus dem Kobaltmischkomplex der Formel

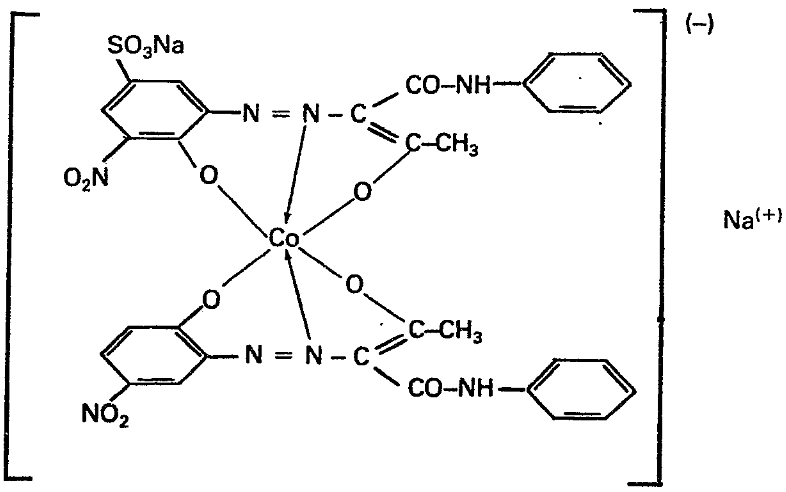

und den beiden entsprechenden symmetrsichen 1:2-Kobaltkomplex besteht. Die Farbstoffe lassen sich durch Zugabe von 200 g Kochsalz ausfällen und ergeben nach dem Trocknen und Mahlen ein dunkelbraunes Pulver, welches Wolle, Polyamid und Leder in rotstichig gelben Tönen in guter Lichtechtheit und guten Nassechtheiten färbt.

Verschiebt man das Verhältnis der beiden Ausgangsstoffe zugunsten des Farbstoffes aus diazotierter 6-Nitro-2-aminophenol-4-sulfonsäure und Acetessiganilid und verfährt dann genauso wie in diesem Beispiel angegeben, so erhält man Färbungen mit röteren Nuancen.

Beispiel 3

Das Gemisch aus 0,06 Mol Monoazofarbstoff aus diazotierter 6-Nitro-2-aminophenol-4-sulfonsäure und Acetessiganilid, 0,06 Mol Monoazofarbstoff aus diazotierter 2-Aminophenol-4-sulfonsäure und Acetessiganilid und 0,08 Mol Monoazofarbstoff aus diazotiertem 4-Nitro-2-aminophenol und Acetessiganilid wird in einem Liter Wasser mit 0,1 Mol Kobaltsulfat bei pH 10 behandelt. Nach etwa zweistündigem Rühren bei 70 °C sind im Chromatogramm die drei Ausgangsverbindungen nicht mehr nachzuweisen. Bei Zusatz von Kochsalz fallen die Kobaltkomplexe aus, welche in statistischer Verteilung die drei Kobaltmischkomplexe der folgenden Formeln

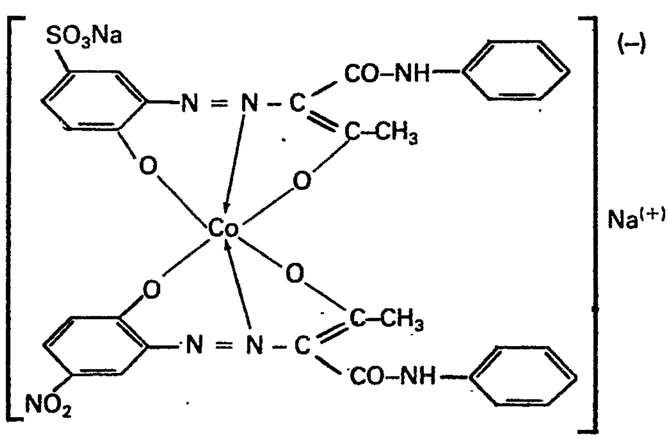

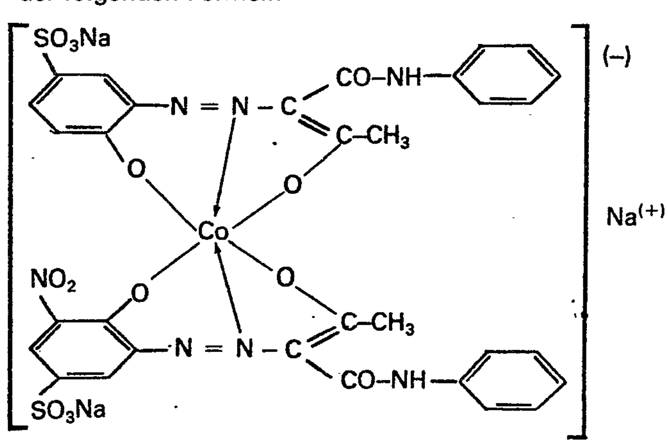

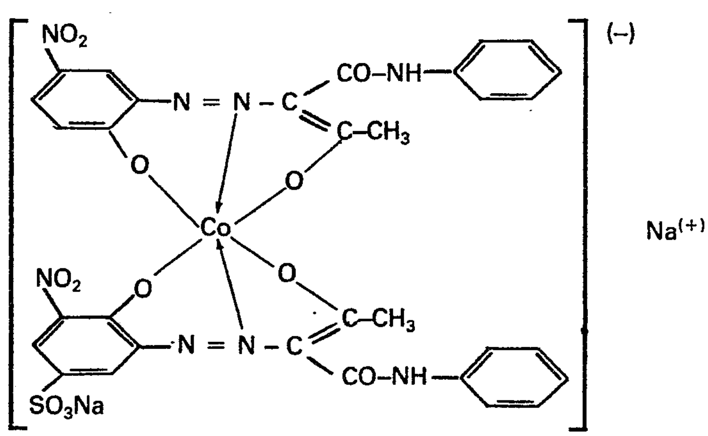

und die entsprechenden drei symmetrischen 1:2-Kobaltkomplexe darstellen. Abgesaugt, getrocknet und gemahlen ergeben sie ein braunes Pulver, das Wolle, Polyamid oder Leder in goldgelben Tönen färbt.

Die folgende Tabelle enthält weitere Beispiele von Azofarbstoffen der Formeln (I) und (II). Sie können analog den vorstehenden Beispielen kobaltiert und durch Aussalzen oder Sprühtrocknen isoliert werden. Die Färbungen auf Wolle, Polyamid und Leder sind gelb bis rotstichig gelb und weisen gute Licht- und Nassechtheiten auf. Die Monoazoverbindungen (I) und (II) können im Verhältnis von 40:60 bis 60:40 zueinander stehen.

Tabelle

| Bsp. Nr. | Azofarbstoff (I) | Azofarbstoff (II) |
|---|---|---|
| 4 | 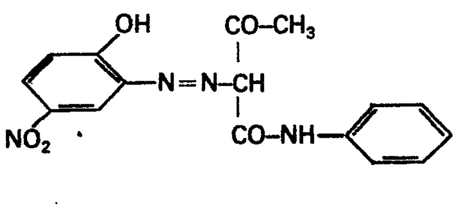 | 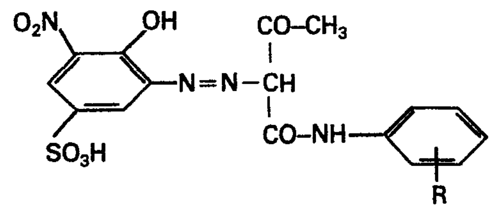<br>R =<br>2-Cl, 3-Cl, 4-Cl, 2–5-di-Cl<br>3–4-di-Cl, 3-$CH_3$, 4-$CH_3$<br>2-$OCH_3$, 2-$OC_2H_5$, 2–5-di-$OCH_3$<br>2-$OCH_3$-5-$CH_3$, 2–5-di-$CH_3$<br>2-$CH_3$-4-Cl |
| 5 | 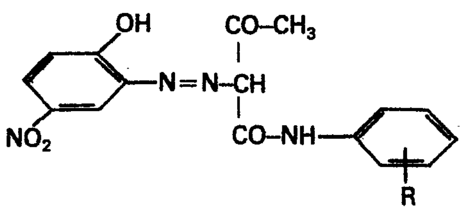<br>R = R des Bsp. 4 | 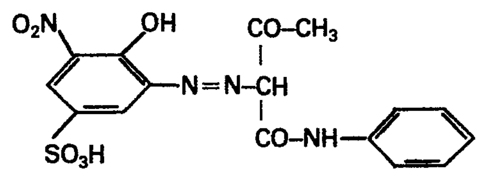 |
| 6 | 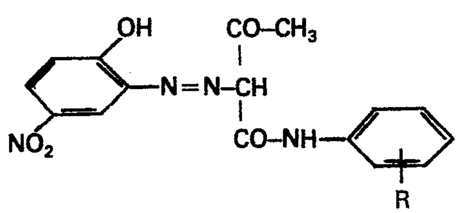<br>R=R des Bsp. 4 | 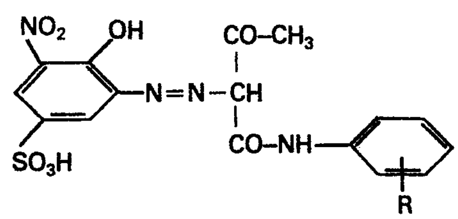<br>R=R des Bsp. 4 |
| 7 | 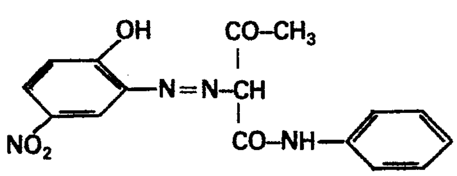 | 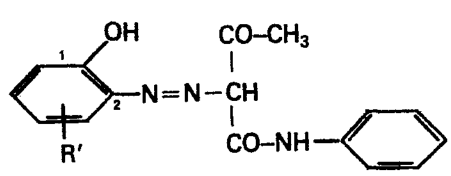<br>R' =<br>4-$SO_3H$, 4-$SO_3H$-5-$NO_2$<br>4-$SO_3H$-6-Cl, 4-$SO_3H$-6-Br<br>4-$SO_3H$-6-$CH_3$, 4-$SO_3H$-6-$C_2H_5$<br>4-$NO_2$-5-$SO_3H$, 4-$NO_2$-6-$SO_3H$<br>4-Cl-5-$SO_3H$, 4-Cl-6-$SO_3H$<br>4-$CH_3$-5-$SO_3H$ oder 4-$CH_3$-6-$SO_3H$ |

(Fortsetzung)

| Bsp. Nr. | Azofarbstoff (I) | Azofarbstoff (II) |
|---|---|---|
| 8 | 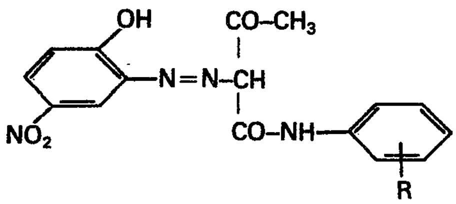<br>R = des Bsp. 4 | 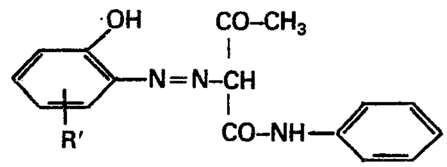<br>R′ = R′ des Bsp. 7 |
| 9 | 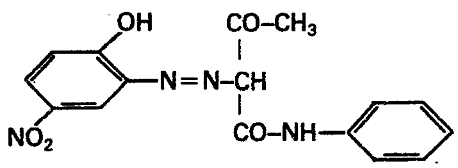 | 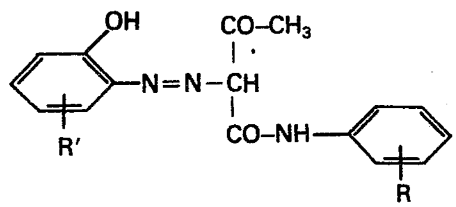<br>R = R des Bsp. 4<br>R′ = R′ des Bsp. 7 |
| 10 | 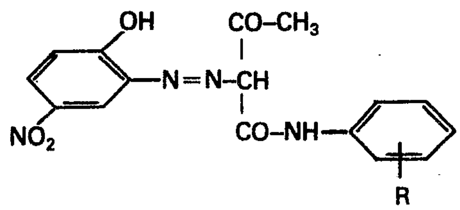<br>R = R des Bsp. 4 | 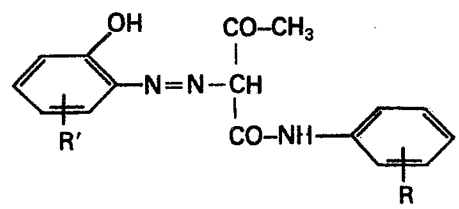<br>R = R des Bsp. 4<br>R′ = R′ des Bsp. 7 |
| 11 | 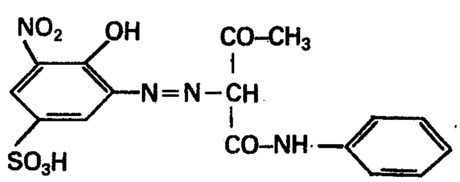 | 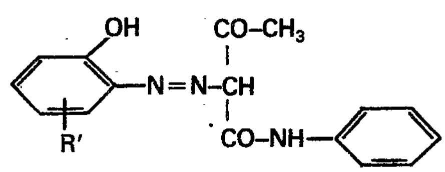<br>R′ =<br>H, 4-Cl, 5-Cl, 5-$NO_2$, 4-$CH_3$<br>5-$CH_3$, 4-$OCH_3$, 4-6-di-CCl<br>4-6-di-$NO_2$, 4-Cl-5-$NO_2$<br>4-Cl-6-$NO_2$, 6-Cl-4-$NO_2$<br>4-$NO_2$--6-NH-CO-$CH_3$<br>6-$NO_2$-4-NH-CO-$CH_3$, 6-$NO_2$, 4-$CH_3$<br>4-$CH_3$-6-$NO_2$, 4-$SO_2$-$CH_3$<br>5-$SO_2$-$CH_3$, 4-$SO_2$-$C_6H_5$<br>5-$SO_2$-$C_6H_5$ |
| 12 | 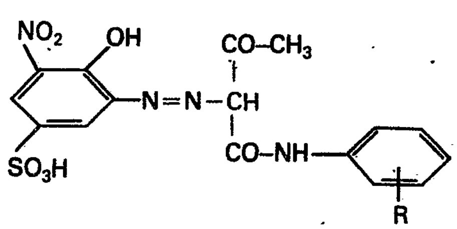<br>R = R des Bsp. 4 | 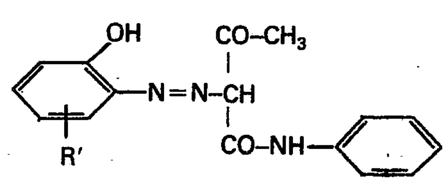<br>R′ = R′ des Bsp. 11 |

(Fortsetzung)

| Bsp. Nr. | Azofarbstoff (I) | Azofarbstoff (II) |
|---|---|---|
| 13 | 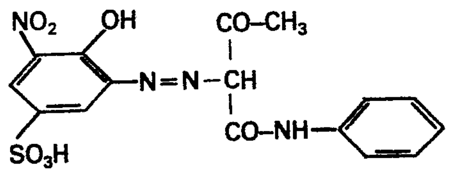 | 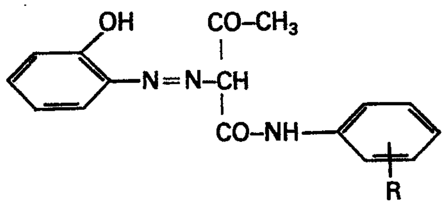<br>R = R des Bsp. 4<br>R' = R' des Bsp. 11 |
| 14 | 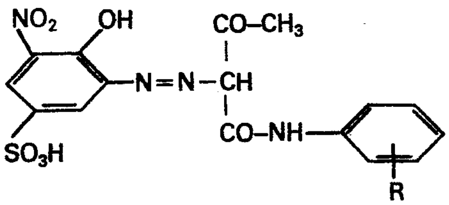<br>R = R des Bsp. 4 | 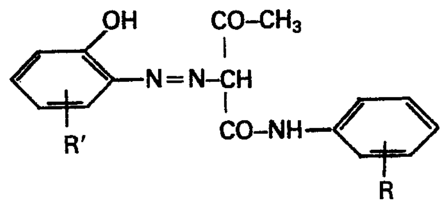<br>R' = R' des Bsp. 11<br>R = R des Bsp. 4 |
| 15 | 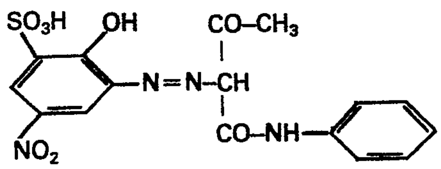 | 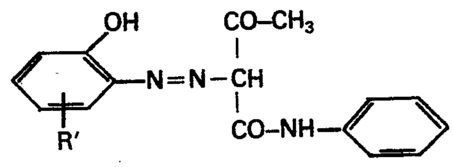<br>R' = R' des Bsp. 11 |
| 16 | 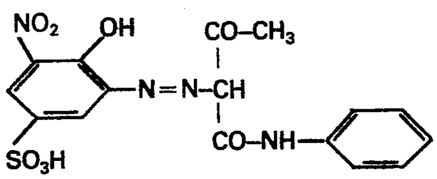 | 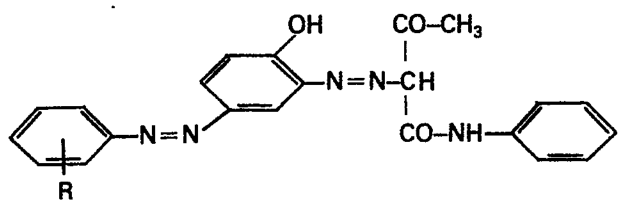<br>R = H, 2-$OCH_3$, 3-Cl, 4-Cl.<br>4-$CH_3$, |
| 17 | 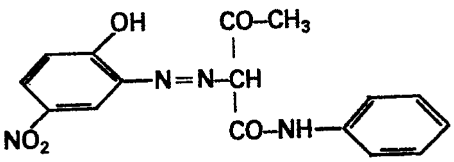 | 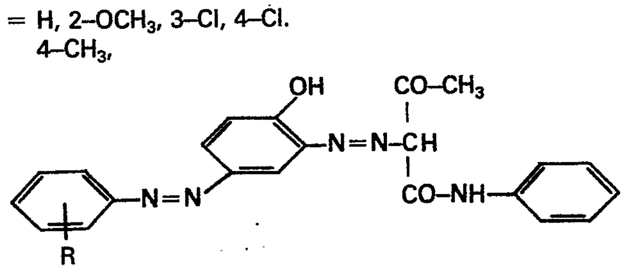<br>R = 3$SO_3H$, 2-$OCH_3$-5-$SO_3H$<br>oder 2-$CH_3$-4-$SO_3H$ |
| 18 | 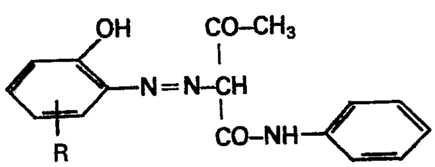 | 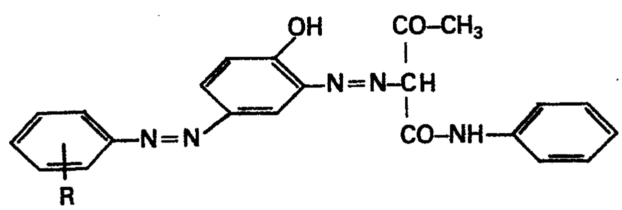<br>R = R des Bsp. 17 |

(Fortsetzung)

| Bsp. Nr. | Azofarbstoff (I) | Azofarbstoff (II) |
|---|---|---|
| | R = 5-$NO_2$, 4–6-di-$NO_2$<br>4-Cl-5-$NO_2$, 4-Cl-6-$NO_2$<br>6-Cl-4-$NO_2$, 4-$CH_3$-6-$NO_2$<br>6-$CH_3$-4-$NO_2$, 4-$NO_2$-6-NH-CO-$CH_3$<br>oder 6-$NO_2$-4-NH-CO-$CH_3$ | |
| 19 | 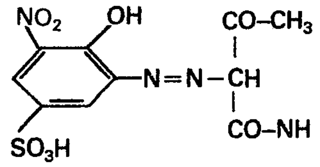 | 1:1–Gemisch aus<br>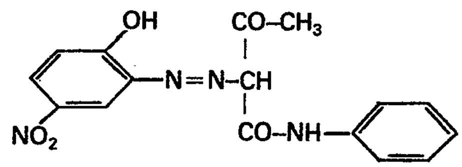 +<br>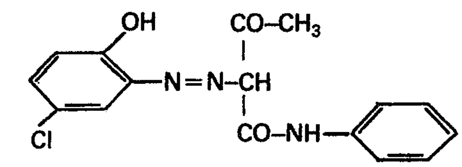 |

**Patentansprüche**

1. Kobaltkomplexe der allgemeinen Formel

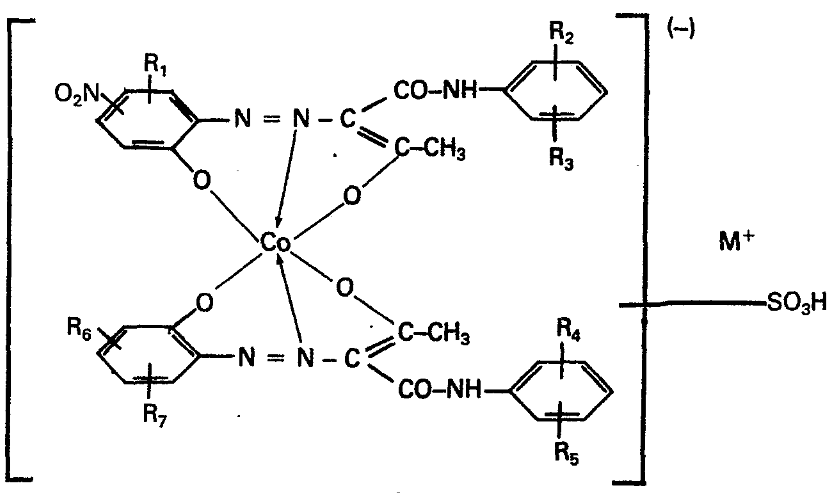

wobei die Sulfonsäuregruppe an einem der Benzol-Ringe oder an einem Arylkern der Arylazo- bzw. Arylsulfonylgruppe in $R_6$ bzw. $R_7$ steht, $M^+$ ein farbloses Kation bedeutet, beispielsweise ein Alkalimetallion wie Lithium-, Natrium- oder Kaliumion, oder Ammonium oder ein mit $C_1$–$C_4$-Alkyl- oder Hydroxy-$C_1$–$C_4$-alkylgruppen substituiertes Ammonium,

$R_1$ Wasserstoff, Chlor, $C_1$–$C_4$-Alkyl, Acylamino oder Nitro

$R_2$, $R_3$, $R_4$ und $R_5$ unabhängig voneinander Wasserstoff, Halogen, $C_1$–$C_4$-Alkyl, $C_1$–$C_4$-Alkoxy,

$R_6$ und $R_7$ unabhängig voneinander Wasserstoff, Nitro, Halogen, $C_1$–$C_4$-Alkyl, $C_1$–$C_4$-Alkoxy, Acylamino, Arylazo, $C_1$–$C_4$-Alkylsulfonyl oder Arylsulfonyl bedeuten.

2. Kobaltkomplexe der Formel

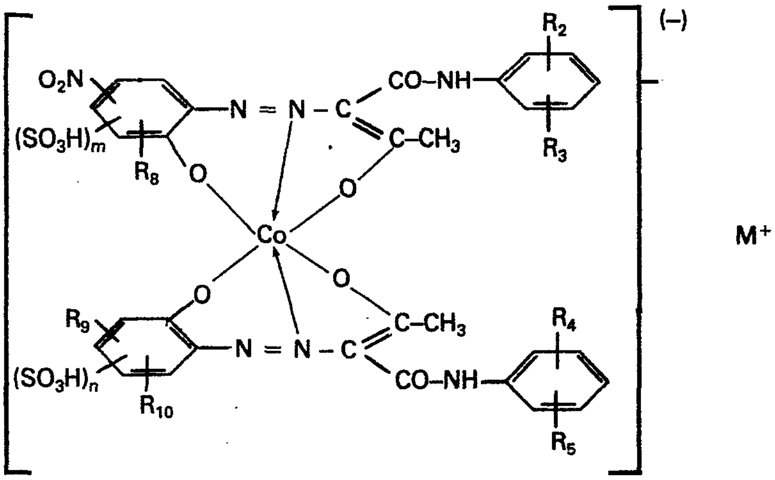

wobei die Symbole $R_2$, $R_3$, $R_4$, $R_5$ die obengenannte Bedeutung besitzen, n und m = 0 oder 1 und n + m = 1; und $R_8$ für Wasserstoff steht, wenn m = 1, und für Wasserstoff, Acetamino, Nitro, Methyl oder Chlor steht, wenn m = 0, und $R_9$ und $R_{10}$ unabhängig voneinander für Wasserstoff, Nitro, Methyl, Chlor, Acetamino, $C_1$–$C_4$-Alkylsulfonyl, Phenylsulfonyl oder Methoxy stehen, wenn n = 0, und $R_9$ für Wasserstoff und $R_{10}$ für Wasserstoff, Nitro, Chlor, Brom, Methyl oder Ethyl steht, wenn n = 1.

3. Verfahren zur Herstellung der Kobaltkomplexe der Ansprüche 1 und 2, dadurch gekennzeichnet, dass man Kobaltkomplexe der Formel

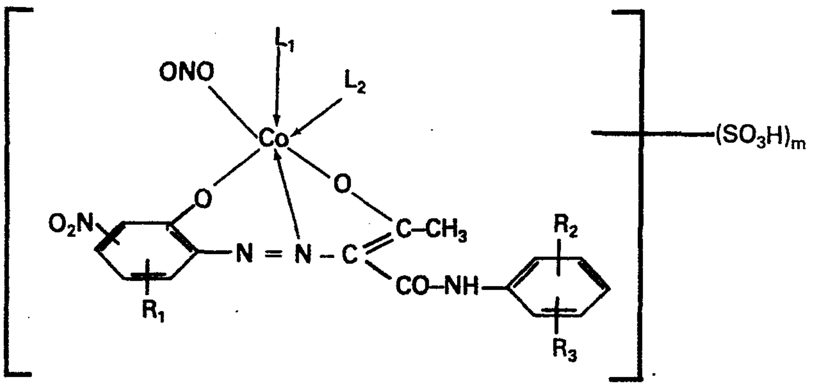

worin

$L_1$ und $L_2$ farblose, einzähnige Liganden darstellen, beispielsweise Sauerstoff- und Stickstoffgruppierungen mit Elektronendonatoreigenschaften, insbesondere Wassermoleküle mit der stöchiometrischen Menge einer Azoverbindung der Formel

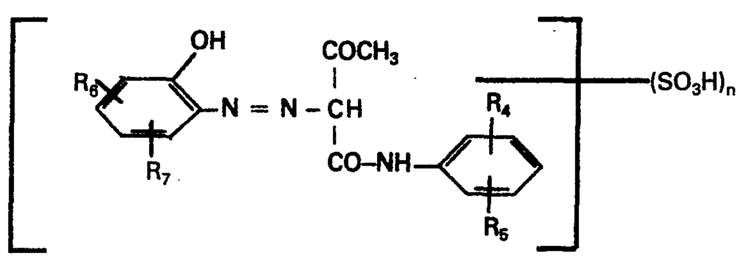

mischt.

4. Verfahren zur Herstellung von Kobaltkomplexen, dadurch gekennzeichnet, dass man eine Mischung aus Farbstoffen der Formel

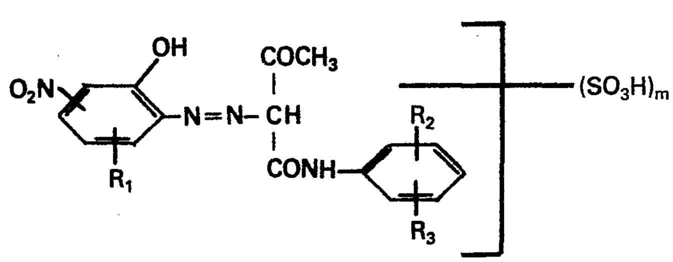

und

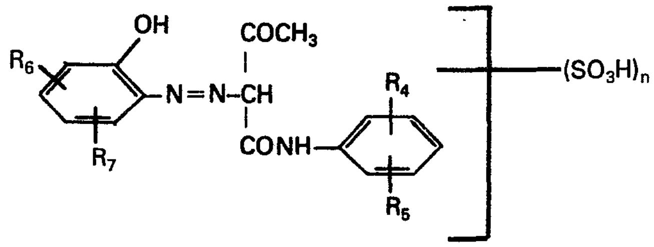

worin

m und n = 0 oder 1 und

m + n = 1 mit kobaltabgebenden Mitteln behandelt.

5. Verwendung der Farbstoffe der Ansprüche 1–3 zum Färben und Bedrucken stickstoffhaltiger Materialien.

**Revendications**

1. Complexes de cobalt de formule générale:

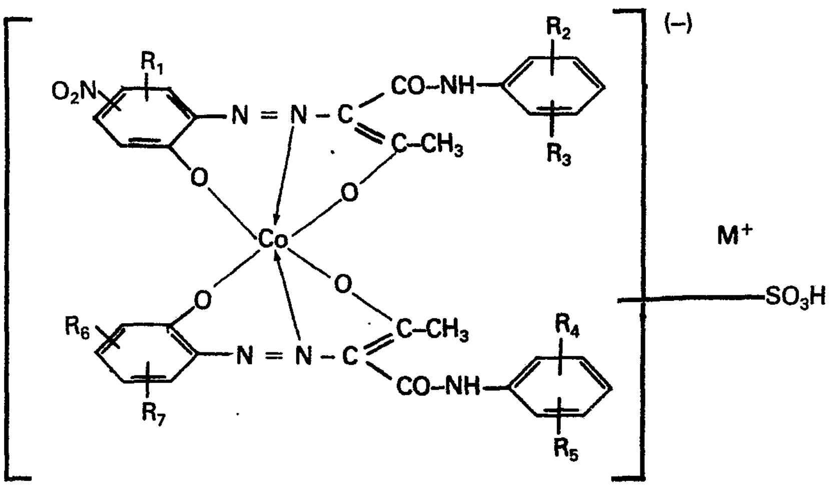

dans laquelle le groupe acide sulfonique est porté par l'un des noyaux benzéniques ou par un noyau arylique du groupe arylazo- ou arylsulfonyle dans $R_6$ ou $R_7$, $M^+$ désigne un cation incolore, par exemple un ion de métal alcalin tel que l'ion lithium, sodium ou potassium, ou l'ion ammonium ou un ion ammonium substitué avec des groupes alkyle en $C_1$ à $C_4$ ou hydroxy-(alkyle en $C_1$ à $C_4$),

$R_1$ est l'hydrogène, le chlore, un groupe alkyle en $C_1$ à $C_4$, acylamino ou nitro

$R_2$, $R_3$, $R_4$ et $R_5$ représentent indépendamment l'un de l'autre l'hydrogène, un halogène, un groupe alkyle en $C_1$ à $C_4$ ou un groupe alkoxy en $C_1$ à $C_4$,

$R_6$ et $R_7$ représentent indépendamment l'un de l'autre l'hydrogène, un groupe nitro, un halogène, un groupe alkyle en $C_1$ à $C_4$, alkoxy en $C_1$ à $C_4$, acylamino, arylazo, (alkyle en $C_1$ à $C_4$) sulfonyle ou arylsulfonyle.

2. Complexes de cobalt de formule:

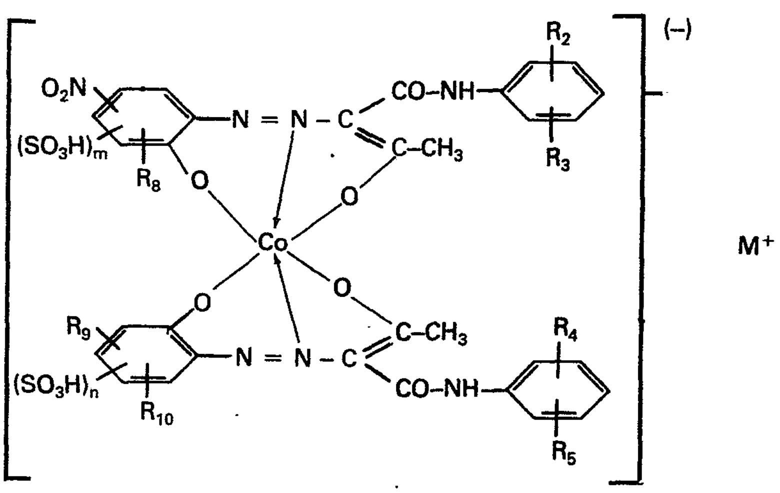

dans laquelle des symboles $R_2$, $R_3$, $R_4$, $R_5$ ont la définition donnée ci-dessus, n et m sont égaux à 0 ou à 1 et la somme n + m est égale à 1; et $R_8$ représente l'hydrogène lorsque m est égal à 1, et l'hydrogène, le groupe acétamino, le groupe nitro, le groupe méthyle ou le chlore lorsque m est égal à 0, et $R_9$ et $R_{10}$ représentent, indépendamment l'un de l'autre, l'hydrogène, un groupe nitro, un groupe méthyle, le chlore, un groupe acétamino, (alkyle en $C_1$ à $C_4$)sulfonyle, phénylsulfonyle ou méthoxy lorsque n est égal à 0 et $R_9$ est l'hydrogène et $R_{10}$ est l'hydrogène, le groupe nitro, le chlore, le brome, le groupe méthyle ou le groupe éthyle, lorsque n est égal à 1.

3. Procédé de production des complexes de cobalt des revendications 1 et 2, caractérisé en ce qu'on mélange des complexes de cobalt de formule:

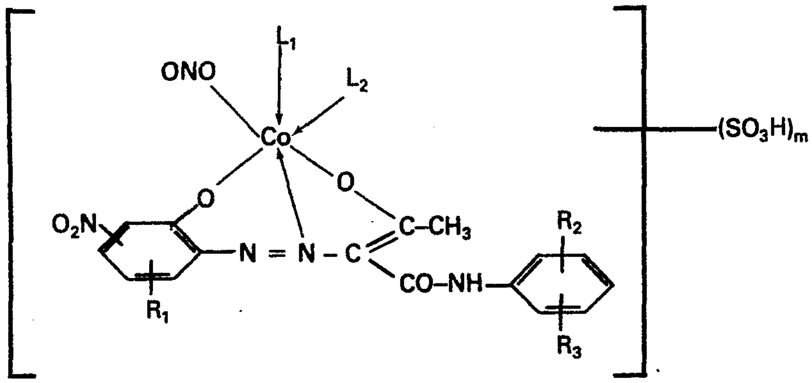

dans laquelle

$L_1$ et $L_2$ représentent des ligands monodentés incolores, par exemple des groupements oxygénés et azotés ayant des propriétés de donneurs d'électrons, notamment des molécules d'eau avec la quantité stoechiométrique d'un composé azoïque de formule:

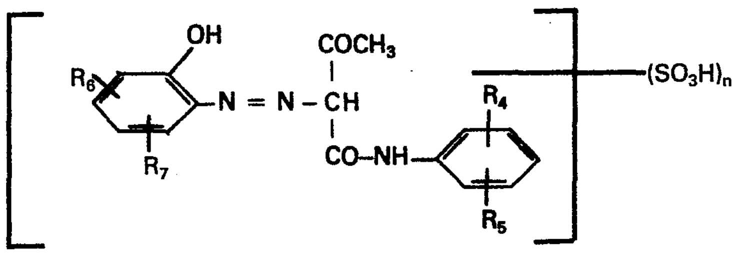

4. Procédé de production de complexes de cobalt, caractérisé en ce qu'on traite un mélange de colorants de formules:

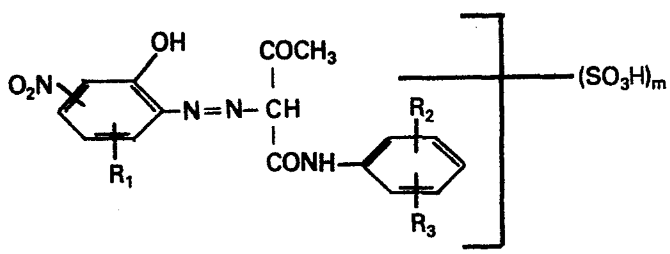

et

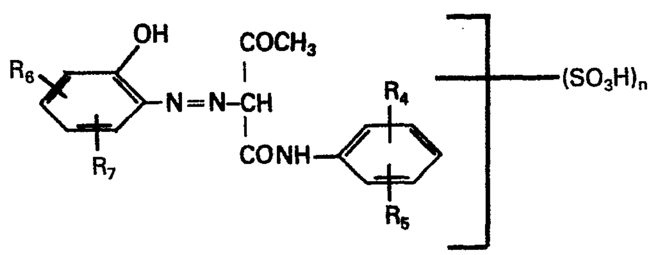

où

m et n sont égaux à 0 ou à 1 et

m + n est égal à 1 avec des agents cédant du cobalt.

5. Utilisation des colorants suivant les revendications 1–3 pour la teinture et l'impression de matières contenant de l'azote.

**Claims**

1. Cobalt complexes of the general formula

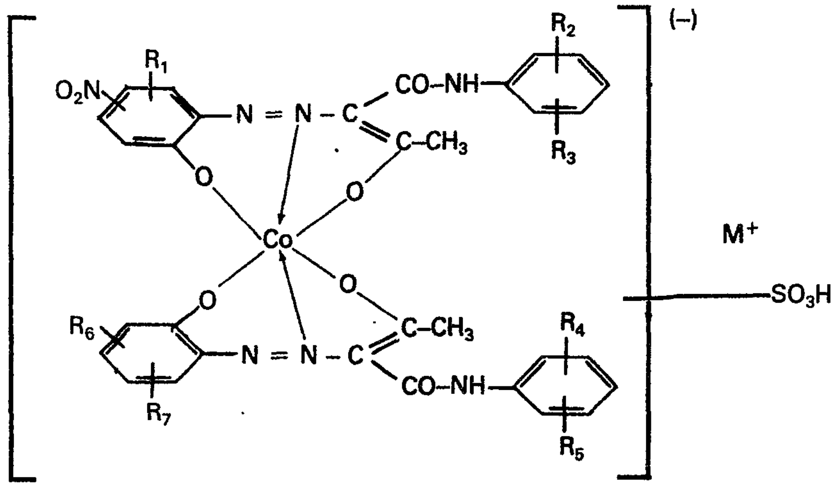

wherein

the sulphonic acid group is on one of the benzene rings or on an aryl nucleus of the arylazo or arylsulphonyl groups in $R_6$ or $R_7$,

$M^+$ denotes a colourless cation, for example an alkali metal ion, such as a lithium ion, sodium ion or potassium ion, or ammonium, or an ammonium substituted by $C_1$–$C_4$-alkyl groups or hydroxy-$C_1$–$C_4$-alkyl groups,

$R_1$ denotes hydrogen, chlorine, $C_1$–$C_4$-alkyl, acylamino or nitro,

$R_2$, $R_3$ and $R_5$ independently of one another denote hydrogen, halogen, $C_1$–$C_4$-alkyl, $C_1$–$C_4$-alkoxy, and

$R_6$ and $R_7$ independently of one another denote hydrogen, nitro, halogen, $C_1$–$C_4$-alkyl, $C_1$–$C_4$-alkoxy, acylamino, arylazo, $C_1$–$C_4$-alkylsulphonyl or arylsulphonyl.

2. Cobalt complexes of the formula

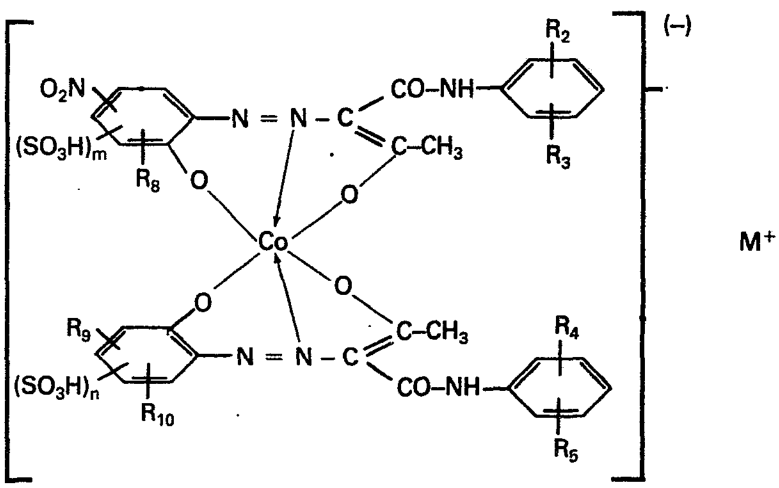

wherein

the symbols $R_2$, $R_3$, $R_4$ and $R_5$ have the abovementioned meaning,

n and m = 0 or 1 and n + m = 1; and

$R_8$ represents hydrogen if m = 1 and hydrogen, acetamino, nitro, methyl or chlorine if m = 0, and

$R_9$ and $R_{10}$ independently of one another represent hydrogen, nitro, methyl, chlorine, acetamino, $C_1$–$C_4$-alkylsulphonyl, phenylsulphonyl or methoxy, if n = 0, and

$R_9$ represents hydrogen and

$R_{10}$ represents hydrogen, nitro, chlorine, bromine, methyl or ethyl if n = 1.

3. Process for the preparation of the cobalt complexes of Claims 1 and 2, characterised in that cobalt complexes of the formula

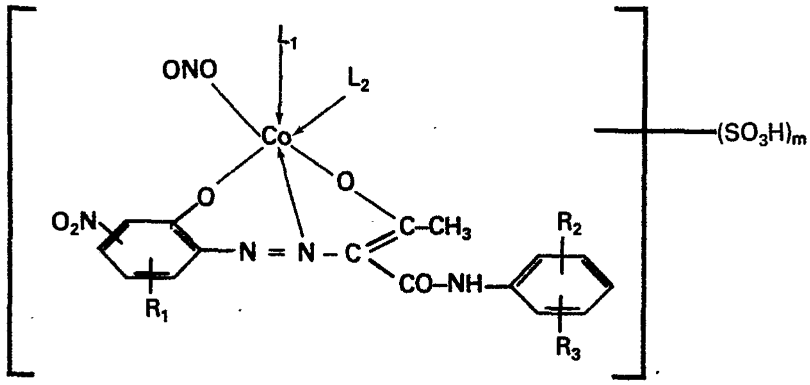

wherein

$L_1$ and $L_2$ represent colourless, monodentate ligands, for example oxygen and nitrogen groupings with electron donor properties, in particular water molecules, are mixed with the stoichiometric amount of an azo compound of the formula

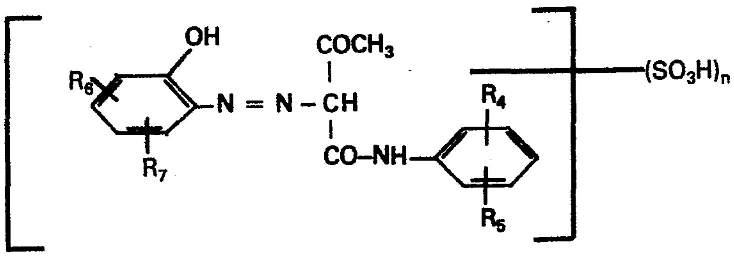

4. Process for the preparation of cobalt complexes, characterised in that a mixture of dyestuffs of the formula

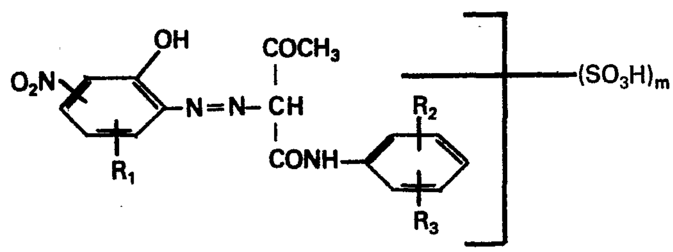

and

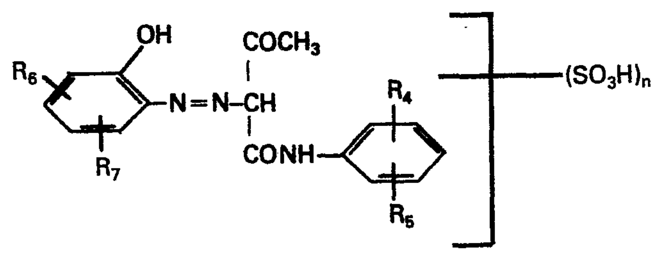

wherein

m and n = 0 or 1 and

m + n = 1, is treated with cobalt-donating agents.

5. Use of the dyestuffs of Claims 1–3 for dyeing and printing nitrogen-containing materials.